(19) Europäisches Patentamt / European Patent Office / Office européen des brevets

(11) **EP 4 691 255 A1**

(12) **EUROPEAN PATENT APPLICATION**
published in accordance with Art. 153(4) EPC

(43) Date of publication:
**11.02.2026  Bulletin 2026/07**

(21) Application number: **24778570.2**

(22) Date of filing: **18.01.2024**

(51) International Patent Classification (IPC):
**A23K 20/111** (2016.01)   **A23K 50/80** (2016.01)

(52) Cooperative Patent Classification (CPC):
**A23K 20/111; A23K 50/80**

(86) International application number:
**PCT/JP2024/001270**

(87) International publication number:
**WO 2024/202424 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.03.2023  JP 2023048091**

(71) Applicant: **Kao Corporation
Chuo-ku,
Tokyo 103-8210 (JP)**

(72) Inventor: **HOSOKAWA, Hiroji
Wakayama-shi, Wakayama 640-8580 (JP)**

(74) Representative: **Hoffmann Eitle
Patent- und Rechtsanwälte PartmbB
Arabellastraße 30
81925 München (DE)**

(54) **PROTEIN DIGESTIBILITY IMPROVER FOR FISH AND SHELLFISH**

(57)    To provide a protein digestibility enhancing agent for fish and shellfish and a feed composition for fish and shellfish capable of increasing a protein digestion rate in fish and shellfish or the like ingesting protein-containing feed.

    A protein digestibility enhancing agent for fish and shellfish containing (A) a reducing agent with an oxidation-reduction potential of 0.1 V or more and 0.6 V or less and (B) a nonionic surfactant.

EP 4 691 255 A1

**Description**

Field of the Invention

The present invention relates to a protein digestibility enhancing agent for fish and shellfish and a feed composition for fish and shellfish using a protein digestibility enhancing agent for fish and shellfish.

Background of the Invention

In the recent aquaculture scene, while feeding pellets and other fish and shellfish feeds has become mainstream, the development of better aquaculture feeds has been promoted to increase the aquaculture production and enhance the quality of fish and shellfish. One example thereof is the development of feed additives.
JP-A 2003-235471 discloses a method for producing a solid feed for fish farming, the method comprising adding an emulsion to a feed raw material, the emulsion being obtained by emulsifying an aqueous solution of a water-soluble polymer and a fish oil with an emulsifier (a polyoxyethylene sorbitan fatty acid ester or the like).
Further, for ruminant animals, JP-A 2007-209355 discloses a feedstuff additive for ruminant animals comprising a polyoxyethylene sorbitan fatty acid ester as a nonionic surfactant (antiseptic) and ethoxyquin as an antioxidant (nonion stabilization). In the Examples, a particulate carrier such as silica or the like is coated with a direct mixture of a polyoxyethylene sorbitan fatty acid ester and ethoxyquin. JP-A H10-113129 discloses a feed composition comprising a fatty acid metal salt including an unsaturated fatty acid, and a phosphorus compound or this and an antioxidant (enhancement in oxidation stability), and discloses that the feed composition can supply unsaturated fatty acids of physiological importance to cattle or the like in a stable form.

Summary of the Invention

One of the qualities required of fish and shellfish feed is to efficiently increase the body weight of individual fish and shellfish. Therefore, it is desirable, for example, to promote protein digestion in the body of fish and shellfish. On the other hand, from the viewpoints of feed sustainability and cost reduction, the development of feeds that use plant proteins, which are environmentally friendly, stable, and inexpensively available, and animal proteins, which have been conventionally used for feed, in combination is being promoted.
Plant proteins, for example, a protein such as soybean meal as a protein source, are useful as alternative proteins to fish meal, but the problem is that they are poor in digestibility and poor in fish growth performance. Therefore, the problem to be solved by the present invention is to provide a protein digestibility enhancing agent for fish and shellfish and a feed composition for fish and shellfish capable of increasing the rate of protein digestion in fish and shellfish or the like ingesting feed that contains protein, and specifically, a plant protein.
In one embodiment, the present invention provides a protein digestibility enhancing agent for fish and shellfish containing (A) a reducing agent with an oxidation-reduction potential of 0.1 V or more and 0.6 V or less [hereinafter referred to as component (A)] and (B) a nonionic surfactant [hereinafter referred to as component (B)].
Further, in another embodiment, the present invention provides a feed composition for fish and shellfish containing (A) a reducing agent with an oxidation-reduction potential of 0.1 V or more and 0.6 V or less [hereinafter referred to as component (A)], (B) a nonionic surfactant [hereinafter referred to as component (B)], and (C) protein [hereinafter referred to as component (C)].
The protein digestibility enhancing agent for fish and shellfish of the present invention can be mixed into fish and shellfish feed or contained in fish and shellfish feed. Further, the feed composition for fish and shellfish of the present invention can be utilized as a component to be mixed into fish and shellfish feed or a component to be contained in fish and shellfish feed. The present invention can increase the rate of protein digestion in fish and shellfish or the like ingesting such feed and increase growth performance of fish and shellfish. The protein digestibility enhancing agent for fish and shellfish of the present invention can increase the rate of digestion of, particularly, plant proteins such as soybean meal or the like as protein sources, and enables effective utilization of alternative proteins to fish meal, as well as being able to also meet the demand for increased food production.

Embodiments of the Invention

[Protein digestibility enhancing agent for fish and shellfish]

In an exemplary embodiment of the present invention, the protein digestibility enhancing agent for fish and shellfish of the present invention (hereinafter also simply referred to as "the enhancing agent of the present invention") contains (A) a reducing agent with an oxidation-reduction potential of 0.1 V or more and 0.6 V or less and (B) a nonionic surfactant. In the present invention, the protein digestibility enhancing agent refers to an agent for enhancing the digestibility (hydrolyzability) of proteins.

The present inventors have found that a significant protein digestibility enhancing effect is synergistically obtained by a combination of two components, i.e., specific components (A) and (B).

Further, the present inventors have found that when the feed composition for fish and shellfish of the present invention containing the enhancing agent of the present invention (for example, the feed composition for fish and shellfish containing the enhancing agent of the present invention as part of fish and shellfish feed) is fed to fish and shellfish, significant digestibility enhancement and growth effects are exhibited in the body of the fish and shellfish.

The reaction mechanism by which the enhancing agent of the present invention acts on proteins is uncertain, but can be inferred, for example, as follows. It is inferred that the reducing agent can act on some protein to cleave disulfide (S-S) bonds between subunits constituting the protein and produce sulfhydryl (SH) groups, thereby changing the structure of the protein. In other words, if S-S bonds in a protein to be digested (for example, a plant protein) can be cleaved, it is inferred that a digestive enzyme acts on the inside of the protein to be digested, and enhancement in the digestibility of the protein is expected.

However, as most reducing agents are water-insoluble, hydrophobic materials, which have a poor affinity for the surface of proteins and are difficult to enter the inside of proteins, they cannot efficiently act on S-S bonds in proteins. Therefore, component (A) as a reducing agent and component (B) as a nonionic surfactant are used together, and component (B) can function as a solvent for component (A) to enhance the affinity between component (A) and the surface of proteins and component (A) can enter the inside of proteins to efficiently act on and cleave the S-S bonds.

Further, the present inventors have found that one having a predetermined reducing power is appropriate as component (A) as a reducing agent to exhibit an efficient digestibility enhancing effect. In other words, in an exemplary embodiment of the present invention, component (A) is a reducing agent with a reduction-oxidation potential of 0.1 V or more and 0.6 V or less.

When the oxidation-reduction potential of a reducing agent is, for example, less than 0.1 V, the reducing power is too strong, and it is inferred that S-S bonds not only in proteins to be digested (for examples, plant proteins) but also in proteins of a digestive enzyme itself are cleaved to cause structural changes, leading to a decrease in the activity of the digestive enzyme itself, and it is predicted that protein digestibility cannot be enhanced. On the other hand, when the oxidation-reduction potential of a reducing agent is, for example, more than 0.6 V, the reducing power is weak, and it is inferred that S-S bond cleavage and structural changes in proteins do not occur in the first place, and it is predicted that a digestibility enhancing effect is not exhibited.

In an exemplary embodiment of the present invention, the oxidation-reduction potential of component (A) is 0.1 V or more, preferably 0.2 V or more, and more preferably 0.3 V or more from the viewpoint of enhancement in digestibility, and 0.6 V or less, preferably 0.5 V or less, and more preferably 0.4 V or less from the same viewpoint. It is inferred that, in an exemplary embodiment of the present invention, if the oxidation-reduction potential of component (A) is 0.1 V or more and 0.6 V or less, the agent can efficiently act on S-S bonds in a protein to be digested (for example, a plant protein) to cleave the S-S bonds while maintaining the protein structure and enzyme activity of a digestive enzyme, and thus can enhance protein digestibility.

The "oxidation-reduction potential" of a material in the present invention refers to the potential value of the material with respect to the standard hydrogen electrode potential 0 V, and can be calculated, for example, by cyclic voltammetry or a measurement method using an oxidation-reduction potential (ORP) measuring device. Note that digestibility in the present invention refers to ease of digestion [hereinafter referred to as digestibility] of proteins in the body of fish and shellfish achieved by the feed composition for fish and shellfish of the present invention.

Component (A) in an exemplary embodiment of the present invention is preferably one or more selected from ethoxyquin and an ethoxyquin derivative from the viewpoint of enhancement in digestibility. Here, examples of the ethoxyquin derivative include an imine species, a dimer, a phosphate, a hydrochloride, an ascorbate, a salicylate, a trolox salt, a quercetin salt, a rutin salt, a hexanoate, or the like of ethoxyquin, but one or more selected from an imine species and a hexanoate are preferable and an imine species is more preferable from the viewpoint of enhancement in digestibility. In an exemplary embodiment of the present invention, component (A) is further preferably ethoxyquin from the viewpoint of enhancement in digestibility.

In an exemplary embodiment of the preset invention, a content of component (A) in the enhancing agent of the present invention is preferably 0.05 mass% or more, more preferably 0.10 mass% or more, and further preferably 0.12 mass% or more from the viewpoint of enhancement in digestibility, and preferably 5.0 mass% or less, more preferably 3.0 mass% or less, further preferably 2.0 mass% or less, furthermore preferably 1.0 mass% or less, and furthermore preferably 0.2 mass% or less from the viewpoint of economy.

In an exemplary embodiment of the present invention, component (B) is a nonionic surfactant. Component (B) is preferably a nonionic surfactant with an HLB of 3 or more and 18 or less, and more preferably with an HLB of 6 or more, further preferably with an HLB of 8 or more, and furthermore preferably with an HLB of 9.5 or more from the viewpoint of enhancement in digestibility, and more preferably with an HLB of 16 or less, further preferably with an HLB of 14 or less, and furthermore preferably with an HLB of 12 or less from the same viewpoint. When component (B) is a nonionic surfactant with an HLB of 3 or more and 18 or less in an exemplary embodiment of the present invention, not only an affinity between component (A) and the surface of a protein to be digested (for example, a plant protein), but also an affinity between a digestive enzyme and the surface of the protein to be digested can be enhanced, and thus, a high protein digestibility enhancing effect can be exhibited.

The HLB of component (B) in an exemplary embodiment of the present invention is determined by the Griffin's formula shown below.

HLB = 20 × (total formula weight of hydrophilic portion of nonionic surfactant) / (molecular weight of nonionic surfactant)

Note that, when component (B) contains multiple nonionic surfactants in an exemplary embodiment of the present invention, the HLB of component (B) is the value obtained by calculating the product of the content (mass%) of each nonionic surfactant in all the nonionic surfactants and the HLB of each nonionic surfactant, and dividing the total of the calculated products by the total content (mass%) of the nonionic surfactants (the weighted average of the HLB of the nonionic surfactants with the content (mass%) of each nonionic surfactant as a weight).

In an exemplary embodiment of the present invention, component (B) is preferably a nonionic surfactant which is liquid at 25°C. Further, in another embodiment of the present invention, a nonionic surfactant with an HLB of 3 or more and 18 or less which is liquid at 25°C is preferable, a nonionic surfactant with an HLB of 6 or more and 16 or less which is liquid at 25°C is more preferable, a nonionic surfactant with an HLB of 8 or more and 14 or less which is liquid at 25°C is furthermore preferable, and a nonionic surfactant with an HLB of 9.5 or more and 12 or less which is liquid at 25°C is furthermore preferable. In an exemplary embodiment of the present invention, if component (B) is a nonionic surfactant which is liquid at 25°C, it also functions as a solvent for component (A) and helps component (A) enter the inside of a protein, and thus, S-S bonds inside the protein can be cleaved efficiently and an excellent protein digestibility enhancing effect is achieved.

Examples of component (B) in an exemplary embodiment of the present invention include, for example, one or more selected from a sorbitan fatty acid ester, a polyoxyethylene sorbitan fatty acid ester, a polyoxyethylene alkyl ether, a polyoxyethylene fatty acid ester, a sucrose fatty acid ester, a glycerin fatty acid ester, a polyoxyethylene glycerin fatty acid ester, and a polyoxyethylene hydrogenated castor oil.

In the constituent unit derived from a fatty acid constituting the sorbitan fatty acid ester, the fatty acid has preferably 8 or more and more preferably 10 or more carbons, and preferably 20 or less and more preferably 18 or less carbons from the viewpoint of enhancement in digestibility. The fatty acid in the constituent unit derived from the fatty acid constituting the sorbitan fatty acid ester may be either of linear and branched fatty acids and is preferably a linear fatty acid. Further, the fatty acid may be either a saturated or unsaturated fatty acid, and mixed fatty acids can be used. Examples of an ester constituting the sorbitan fatty acid ester include a monoester, a diester, and a triester, and a monoester is preferable from the viewpoint of enhancement in digestibility.

Component (B) in an embodiment of the present invention is preferably a sorbitan fatty acid (mono)ester made up of a linear fatty acid with 10 or more carbons and 18 or less carbons.

In the constituent unit derived from a fatty acid constituting the polyoxyethylene sorbitan fatty acid ester, the fatty acid has preferably 8 or more and more preferably 10 or more carbons, and preferably 20 or less and more preferably 18 or less carbons from the viewpoint of enhancement in digestibility. The fatty acid in the constituent unit derived from the fatty acid constituting the polyoxyethylene sorbitan fatty acid ester may be either of linear and branched fatty acids and is preferably a linear fatty acid. Further, the fatty acid may be either a saturated or unsaturated fatty acid, and mixed fatty acids can be used. Examples of an ester constituting the polyoxyethylene sorbitan fatty acid ester include a monoester, a diester, and a triester, and a monoester is preferable from the viewpoint of enhancement in digestibility. The average number of added moles of ethylene oxide of the polyoxyethylene sorbitan fatty acid ester is preferably 2 or more and more preferably 5 or more, and preferably 40 or less, more preferably 25 or less, and further preferably 10 or less from the viewpoint of enhancement in digestibility.

Component (B) in an embodiment of the present invention is preferably a polyoxyethylene sorbitan fatty acid (mono)ester made up of a linear fatty acid with 10 or more carbons and 18 or less carbons and having an average number of added moles of ethylene oxide of 5 or more and 25 or less.

The polyoxyethylene alkyl ether has an alkyl group with preferably 8 or more and more preferably 10 or more carbons, and preferably 20 or less, more preferably 18 or less, and further preferably 16 or less carbons from the viewpoint of enhancement in digestibility. The polyoxyethylene alkyl ether may have either of linear and branched alkyl groups, and preferably has a linear alkyl group from the viewpoint of enhancement in digestibility. The average number of added moles of ethylene oxide of the polyoxyethylene alkyl ether is preferably 2 or more and more preferably 8 or more, and preferably 50 or less, more preferably 45 or less, and further preferably 40 or less from the viewpoint of enhancement in digestibility.

Component (B) in an embodiment of the present invention is preferably a polyoxyethylene alkyl ether having an alkyl group with 10 or more carbons and 16 or less carbons and having ethylene oxide with an average number of added moles of 8 or more and 40 or less.

In the constituent unit derived from a fatty acid constituting the polyoxyethylene fatty acid ester, the fatty acid has preferably 6 or more and more preferably 8 or more carbons, and preferably 20 or less and more preferably 18 or less carbons from the viewpoint of enhancement in digestibility. The fatty acid in the constituent unit derived from the fatty acid constituting the polyoxyethylene fatty acid ester may be either of linear and branched fatty acids and is preferably a linear fatty acid. Further, the fatty acid may be either a saturated or unsaturated fatty acid, and mixed fatty acids can be used. The average number of added moles of ethylene oxide of the polyoxyethylene fatty acid ester is preferably 2 or more and more preferably 10 or more, and preferably 50 or less and more preferably 40 or less from the viewpoint of enhancement in digestibility.

Component (B) in an embodiment of the present invention is preferably a polyoxyethylene fatty acid ester made up of a linear fatty acid with 8 or more carbons and 18 or less carbons and having ethylene oxide with an average number of added moles of 10 or more and 40 or less.

In the constituent unit derived from a fatty acid constituting the sucrose fatty acid ester, the fatty acid has preferably 8 or more and more preferably 10 or more carbons, and preferably 20 or less and more preferably 18 or less carbons from the viewpoint of enhancement in digestibility. The fatty acid in the constituent unit derived from the fatty acid constituting the sucrose fatty acid ester may be either of linear and branched fatty acids and is preferably a linear fatty acid. Further, the fatty acid may be either a saturated or unsaturated fatty acid, and mixed fatty acids can be used.

Component (B) in an embodiment of the present invention is preferably a sucrose fatty acid ester made up of a linear fatty acid with 10 or more carbons and 18 or less carbons.

In the constituent unit derived from a fatty acid constituting the glycerin fatty acid ester, the fatty acid has preferably 6 or more and more preferably 8 or more carbons, and preferably 20 or less and more preferably 18 or less carbons from the viewpoint of enhancement in digestibility. The fatty acid in the constituent unit derived from the fatty acid constituting the glycerin fatty acid ester may be either of linear and branched fatty acids and is preferably a linear fatty acid from the viewpoint of enhancement in digestibility. Further, the fatty acid may be either a saturated or unsaturated fatty acid, and mixed fatty acids can be used. Examples of an ester constituting the glycerin fatty acid ester include a monoester, a diester, and a triester, and a monoester is preferable.

Component (B) in an embodiment of the present invention is preferably a glycerin fatty acid (mono)ester made up of a linear fatty acid with 8 or more carbons and 18 or less carbons.

In the constituent unit derived from a fatty acid constituting the polyoxyethylene glycerin fatty acid ester, the fatty acid has preferably 6 or more and more preferably 8 or more carbons, and preferably 20 or less and more preferably 18 or less carbons from the viewpoint of enhancement in digestibility. The fatty acid in the constituent unit derived from the fatty acid constituting the polyoxyethylene glycerin fatty acid ester may be either of linear and branched fatty acids and is preferably a linear fatty acid from the viewpoint of enhancement in digestibility. Further, the fatty acid may be either a saturated or unsaturated fatty acid, and mixed fatty acids can be used. Examples of an ester constituting the polyoxyethylene glycerin fatty acid ester include a monoester, a diester, and a triester, and a monoester is preferable. The average number of added moles of ethylene oxide of the polyoxyethylene glycerin fatty acid ester is preferably 2 or more and more preferably 10 or more, and preferably 50 or less and more preferably 40 or less from the viewpoint of enhancement in digestibility.

Component (B) in an embodiment of the present invention is preferably a polyoxyethylene glycerin fatty acid (mono)ester made up of a linear fatty acid with 8 or more carbons and 18 or less carbons and having ethylene oxide with an average number of added moles of 10 or more and 40 or less.

The average number of added moles of ethylene oxide of the polyoxyethylene hydrogenated castor oil is preferably 2 or more, more preferably 10 or more, and further preferably 20 or more, and preferably 50 or less and more preferably 45 or less from the viewpoint of enhancement in digestibility.

In an exemplary embodiment of the present invention, component (B) is preferably one or more nonionic surfactants selected from a sorbitan fatty acid ester and a polyoxyethylene sorbitan fatty acid ester from the viewpoint of enhancement in digestibility. Further, in another exemplary embodiment of the present invention, component (B) is preferably one or more nonionic surfactants with an HLB of 3 or more and 18 or less selected from a sorbitan fatty acid ester and a polyoxyethylene sorbitan fatty acid ester, and further, more preferably one or more nonionic surfactants with an HLB of 3 or more and 18 or less which are liquid at 25°C selected from a sorbitan fatty acid ester and a polyoxyethylene sorbitan fatty acid ester from the viewpoint of enhancement in digestibility.

In the enhancing agent of the present invention in an exemplary embodiment of the present invention, a content of component (B) in all surfactants is preferably 95 mass% or more, more preferably 98 mass% or more, further preferably 99 mass% or more, and furthermore preferably substantially 100 mass% from the viewpoint of enhancement in digestibility.

In the enhancing agent of the present invention in an exemplary embodiment of the present invention, a mass ratio of a content of component (A) to a content of component (B) [(A)/(B)] is preferably 0.0001 or more, more preferably 0.0010 or more, further preferably 0.0012 or more, furthermore preferably 0.0015 or more, and furthermore preferably 0.002 or more from the viewpoint of enhancement in growth performance, and preferably 0.1 or less, more preferably 0.02 or less, further preferably 0.012 or less, furthermore preferably 0.010 or less, furthermore preferably 0.008 or less, and furthermore preferably 0.004 or less from the viewpoints of enhancement in growth performance, costs, and productivity.

Further, in the enhancing agent of the present invention in an exemplary embodiment of the present invention, a mass ratio of a content of component (A) to a content of component (B) [(A)/(B)] is preferably 0.0001 or more, more preferably 0.0005 or more, further preferably 0.0010 or more, and furthermore preferably 0.0011 or more from the viewpoint of enhancement in digestibility, and preferably 0.05 or less, more preferably 0.02 or less, further preferably 0.004 or less, and furthermore preferably 0.002 or less from the viewpoints of (reasonable) digestion promotion, costs, and productivity.

The enhancing agent of the present invention in an exemplary embodiment of the present invention is preferably liquid at 25°C. If the enhancing agent of the present invention is liquid at 25°C, it can efficiently act on the inside of a protein as well, and can exhibit a high digestibility enhancing effect on the protein.

When the enhancing agent of the present invention in an exemplary embodiment of the present invention is liquid at 25°C, it has a viscosity at 25°C of preferably 1 mPa·s or more and more preferably 10 mPa·s or more, and preferably 10000 mPa·s or less and more preferably 1000 mPa·s or less. The viscosity can be measured, for example, using a B-type viscometer (model number: TVB-10 manufactured by Toki Sangyo Co., Ltd, using No. 2 rotor, 60 r/min).

The enhancing agent of the present invention in an exemplary embodiment of the present invention can contain optional components other than components (A) and (B) in a range that the effect of the present invention is not impaired. The agent can contain as the optional components, for example, reducing agents, water, excipients, emulsifiers, antioxidants, antifungal agents, antibacterial agents, antibiotics, nutrients (lipids, sugars, carbohydrates, proteins, amino acids, vitamins, minerals, or the like), carotenoid fortifiers, flavorings, flavor enhancers, enzymes, probiotics, and organic acids other than the foregoing, or the like (each excluding components (A) and (B)).

A content of the optional components that may be contained in the enhancing agent of the present invention in an exemplary embodiment of the present invention, in other words, a content of the components other than components (A) and (B) in the enhancing agent of the present invention, is preferably 10 mass% or less and more preferably 1 mass% or less. Further, the enhancing agent of the present invention in another embodiment of the present invention is a protein digestibility enhancing agent composed of components (A) and (B), and the enhancing agent of the present invention in another embodiment of the present invention is a protein digestibility enhancing agent containing components (A) and (B) as active components.

If being mixed with protein or containing protein, the enhancing agent of the present invention in an exemplary embodiment of the present invention acts on the protein and has a digestibility enhancing effect on the protein, and thus, the agent can be, for example, added to fish and shellfish feed or the like.

Further, the enhancing agent of the present invention in an exemplary embodiment of the present invention can be mixed with or contain a plant protein which is a partial alternative feed of a fish and shellfish feed, and specifically, soy protein. In other words, examples of the enhancing agent of the present invention include a plant protein digestibility enhancing agent. Further, examples of the enhancing agent of the present invention in another embodiment of the present invention include a soy protein digestibility enhancing agent. Further, examples of the enhancing agent of the present invention in another embodiment of the present invention include a soy protein digestibility enhancing agent for fish and shellfish feed.

Further, the enhancing agent of the present invention in an exemplary embodiment of the present invention can be added to a fish and shellfish feed containing a plant protein which is a partial alternative feed of a fish and shellfish feed, the plant protein being further one or more protein sources selected from soybean meal, corn gluten meal, and defatted rice bran and further soy protein. In other words, the enhancing agent of the present invention in an exemplary embodiment of the present invention is an additive for fish and shellfish feed containing a plant protein. Further, examples of the enhancing agent of the present invention in another embodiment of the present invention include an additive for fish and shellfish feed containing a plant protein originating from one or more protein sources selected from soybean meal, corn gluten meal, and defatted rice bran. Further, examples of the enhancing agent of the present invention in another embodiment of the present invention include an additive for fish and shellfish feed containing soy protein.

[Feed composition for fish and shellfish]

In an exemplary embodiment of the present invention, the feed composition for fish and shellfish of the present invention (hereinafter also simply referred to as "the feed composition of the present invention") contains (A) a reducing agent with an oxidation-reduction potential of 0.1 V or more and 0.6 V or less [hereinafter referred to as component (A)], (B) a nonionic surfactant [hereinafter referred to as component (B)], and (C) protein. Further, in another embodiment of the present invention, the feed composition for fish and shellfish of the present invention contains the aforementioned enhancing agent of the present invention and (C) protein [hereinafter referred to as component (C)].

Further, in another exemplary embodiment, the feed composition of the present invention contains components (A) and (B) as active components of the enhancing agent of the present invention. In other words, in an exemplary embodiment of the present invention, the feed composition of the present invention can contain the enhancing agent of the present invention and component (C). Components (A) and (B) and the enhancing agent can be the same as in the specific examples or preferable aspects of components (A) and (B) and the enhancing agent of the present invention described above.

In an exemplary embodiment of the present invention, component (C) can contain a plant protein and preferably is a plant protein from the viewpoints of feed sustainability and cost reduction.

Examples of the plant protein include, for example, a protein derived from soybean, barley, wheat, corn, sorghum, rapeseed, rice, or the like, and a protein derived from any one selected from soybean, corn, and rice is preferable, and a protein derived from soybean (soy protein) is further preferable from the viewpoints of economy and amino acid composition.

Further, examples of protein sources containing proteins derived from these plants (plant proteins) include and are not particularly limited to soybean meal, corn gluten meal, corn, milo, barley, wheat, cassava, bran, defatted rice bran, rapeseed meal, feed rice, and others, but soybean meal, corn gluten meal, and defatted rice bran are preferable as protein sources, and soybean meal is further preferable as a protein source from the viewpoints of economy and amino acid composition.

Further, in an exemplary embodiment of the present invention, component (C) can contain, in addition to the plant protein, a protein derived from an animal, a so-called animal protein, from the viewpoint of ingestibility of fish and shellfish. Component (C) can contain, as the animal protein, a protein derived from fish meal, chicken meal, or the like. A content of the animal protein in component (C) in an exemplary embodiment of the present invention is preferably 3 mass% or more and more preferably 5 mass% or more, and preferably 90 mass% or less, more preferably 85 mass% or less, further preferably 80 mass% or less, and furthermore preferably 75 mass% or less from the viewpoint of enhancement in growth performance, and a total amount with a content of the plant protein as the balance is 100 mass%. Note that when the enhancing agent of the present invention contains protein as an optional component in an exemplary embodiment of the present invention, the content of component (C) is the amount including that of the protein contained in the enhancing agent of the present invention.

In an exemplary embodiment of the present invention, when component (C) is a plant protein, for example, soy protein as an example, glycinin and $\beta$-conglycinin, which are fractions of soy protein, occupy about 70% of the soy protein. Glycinin is a hexamer composed of acidic subunits and basic subunits bonded by disulfide (S-S) bonds, and $\beta$-conglycinin is a trimer composed of three subunits $\alpha$, $\alpha'$, and $\beta$. Especially, the hexamer glycinin has a large molecular weight of 300,000 to 360,000, and is considered to be, for example, a component determining the rate of protein digestion (a rate-determining component in protein digestion) in the body of fish and shellfish. The present inventors have found that the rate of degradation of a rate-determining component in protein digestion, for example, like the hexamer glycinin if component (C) is soy protein, is increased by the action of the enhancing agent of the present invention on the rate-determining component in protein digestion.

When component (C) is soy protein in an exemplary embodiment of the present invention, a mass ratio of a content of glycinin to a content of $\beta$-conglycinin in the soy protein (glycinin/$\beta$-conglycinin) is preferably 1 or more and 10 or less from the viewpoint of exhibiting a protein digestibility enhancing effect, although the mass ratio glycinin/$\beta$-conglycinin varies depending on the species, production area, or the like of the soy and thus is not particularly limited. The mass ratio glycinin/$\beta$-conglycinin is preferably 1 or more, more preferably 2 or more, and further preferably 2.5 or more, and preferably 10 or less, more preferably 5 or less, and further preferably 3 or less. The mass ratio glycinin/$\beta$-conglycinin can be determined, for example, from a band strength ratio between glycinin and $\beta$-conglycinin using an electrophoresis method.

In the feed composition of the present invention in an exemplary embodiment of the present invention, an SH group concentration per mass of component (C) in the composition preferably falls within the range of 6.5 $\mu$mol/g or more and 20 $\mu$mol/g or less. The SH group concentration per mass of component (C) in the composition is preferably 6.5 $\mu$mol/g more, more preferably 7 $\mu$mol/g or more, and further preferably 8 $\mu$mol/g or more from the viewpoint of enhancement in protein digestibility, and preferably 20 $\mu$mol/g or less, more preferably 15 $\mu$mol/g or less, and further preferably 10 $\mu$mol/g or less from the viewpoints of costs and productivity of the feed composition. In an exemplary embodiment of the present invention, the SH group concentration in the feed composition of the present invention can be quantified, for example, by the method described in the Examples. In some cases, enhancement in protein digestibility can be evaluated by measuring an increase in the SH group concentration in a protein. Note that when the feed composition of the present invention contains, for example, as an optional component, an SH group compound, such as cysteine, one of amino acids, or the like, the SH group concentration therein indicates SH groups in the composition from which the SH group-containing compound has been removed using dialysis or the like.

Further, when component (C) is, for example, soy protein in an exemplary embodiment of the present invention, an SH group concentration per mass of component (C) in the composition is preferably 6.5 $\mu$mol/g or more, more preferably 7 $\mu$mol/g or more, and further preferably 8 $\mu$mol/g or more from the viewpoint of enhancement in protein digestibility, and preferably 20 $\mu$mol/g or less, more preferably 15 $\mu$mol/g or less, and further preferably 10 $\mu$mol/g or less

from the viewpoints of costs and productivity of the feed composition.

In the feed composition of the present invention in an exemplary embodiment of the present invention, a content of component (C) relative to a total content of components (A), (B), and (C) is preferably 10 mass% or more, more preferably 20 mass% or more, and further preferably 30 mass% or more from the viewpoint of effective protein utilization, and preferably 90 mass% or less, more preferably 70 mass% or less, and further preferably 50 mass% or less from the viewpoints of costs and productivity.

In an exemplary embodiment of the present invention, the feed composition of the present invention contains components (A), (B), and (C). In the feed composition of the present invention in an exemplary embodiment of the present invention, a content of component (A) relative to 100 parts by mass of component (C) is preferably 0.01 parts by mass or more, more preferably 0.02 parts by mass or more, and further preferably 0.03 parts by mass or more from the viewpoint of enhancement in digestibility, and preferably 1 part by mass or less, more preferably 0.2 parts by mass or less, further preferably 0.1 parts by mass or less, and furthermore preferably 0.08 parts by mass or less from the viewpoints of (reasonable) digestion promotion, costs, and productivity. In the feed composition of the present invention in an exemplary embodiment of the present invention, a content of component (B) relative to 100 parts by mass of component (C) is preferably 1 part by mass or more, more preferably 10 parts by mass or more, and further preferably 20 parts by mass or more from the viewpoint of enhancement in digestibility, and preferably 100 parts by mass or less, more preferably 60 parts by mass or less, and further preferably 50 parts by mass or less from the viewpoints of costs and productivity.

Further, in an exemplary embodiment of the present invention, the feed composition of the present invention contains the aforementioned enhancing agent of the present invention and (C) protein [hereinafter referred to as component (C)], and a content of the enhancing agent in the feed composition of the present invention is preferably 1 mass% or more, more preferably 2 mass% or more, and further preferably 5 mass% or more from the viewpoint of enhancement in digestibility, and preferably 50 mass% or less, more preferably 30 mass% or less, further preferably 20 mass% or less, and furthermore preferably 10 mass% or less from the viewpoints of costs and productivity.

In an exemplary embodiment of the present invention, the feed composition of the present invention preferably contains, as nutrients, components other than protein contained in a protein source. In other words, in an exemplary embodiment of the present invention, the feed composition of the present invention preferably contains nutrients other than component (C) (sugars, lipids, carbohydrates, amino acids, vitamins, minerals, or the like).

In an exemplary embodiment of the present invention, the feed composition of the present invention can contain, in addition to the enhancing agent and the protein of component (C), water, reducing agents, excipients, emulsifiers, antioxidants, antifungal agents, antibacterial agents, antibiotics, nutrients (lipids, sugars, carbohydrates, amino acids, vitamins, minerals, or the like), carotenoid fortifiers, flavorings, flavor enhancers, enzymes, probiotics, and organic acids other than the foregoing, or the like (each excluding components (A), (B), and (C)) as optional components in a range that the effect of the present invention is not impaired.

A content of the optional components that may be contained in the feed composition of the present invention in an exemplary embodiment of the present invention, in other words, a content of the components other than components (A), (B), and (C) in the feed composition of the present invention in an exemplary embodiment of the present invention is preferably 1 mass% or more and more preferably 10 mass% or more from the viewpoint of enhancement in growth performance, and preferably 80 mass% or less, more preferably 70 mass% or less, and further preferably 60 mass% or less from the viewpoint of enhancing digestibility and growth performance. Note that when the feed composition of the present invention is obtained by using the enhancing agent of the present invention, the content of the optional components is the amount including the optional components contained in the enhancing agent of the present invention (excluding component (C)).

In an exemplary embodiment of the present invention, the feed composition of the present invention can contain, as component (C), a plant protein which is a partial alternative feed of a fish and shellfish feed, and specifically, soy protein. In other words, in an exemplary embodiment, the feed composition of the present invention is a plant protein composition and a soy protein composition. Further, in another exemplary embodiment, the feed composition of the present invention is a plant protein composition for fish and shellfish feed and a soy protein composition for fish and shellfish feed.

Further, in an exemplary embodiment of the present invention, the feed composition of the present invention can contain, as component (C), a plant protein and further soy protein, and a protein other than soy protein and further a plant protein other than soy protein. Further, in another embodiment of the present invention, the feed composition of the present invention can contain, as component (C), a plant protein and further soy protein, and an animal protein.

In the feed composition of the present invention in an exemplary embodiment of the present invention, the plant protein is in an amount of preferably 1 mass% or more, more preferably 3 mass% or more, and further preferably 5 mass% or more, and preferably 50 mass% or less, more preferably 30 mass% or less, further preferably 20 mass% or less, and furthermore preferably 10 mass% less from the viewpoint of enhancement in growth performance and the viewpoint of economy. In the feed composition of the present invention in an exemplary embodiment of the present invention, a content of the animal protein is preferably 3 mass% or more, more preferably 5 mass% or more, and further preferably 10 mass% or more from the viewpoint of enhancement in growth performance, and preferably 50 mass% or less and more preferably 30 mass% or less from the viewpoint of economy. In an exemplary embodiment of the present invention, when the feed composition of the present invention contains a plant protein and an animal protein, a mass ratio of a content of the plant protein to a content of the animal protein in the feed composition, plant protein/animal protein, is, for example, preferably 0.1 or more, more preferably 0.2 or more, and further preferably 0.3 or more from the viewpoint of economy, and preferably 10 or less and more preferably 1 or less from the viewpoint of enhancement in growth performance.

[Method for producing feed composition]

In an exemplary embodiment of the present invention, the feed composition of the present invention can be produced by mixing (A) a reducing agent with an oxidation-reduction potential of 0.1 V or more and 0.6 V or less [hereinafter referred to as component (A)], (B) a nonionic surfactant [hereinafter referred to as component (B)], and (C) protein [hereinafter referred to as component (C)].

Further, in another exemplary embodiment, the feed composition of the present invention can be produced by mixing the aforementioned enhancing agent of the present invention and component (C). In an example, the feed composition of the present invention can be produced by adding the enhancing agent of the present invention which is liquid at 25°C to component (C).

In an exemplary embodiment of the present invention, the method for producing a feed composition of the present invention is preferably a method for producing a feed composition including further mixing a mixture of components (A) and (B) [hereinafter referred to as the mixture] with component (C) from the viewpoints of workability and enhancement in protein digestibility. Further, in another embodiment of the present invention, the method for producing a feed composition of the present invention is preferably a method for producing a feed composition including further mixing a mixture of component (A) in liquid form and component (B) in liquid form with component (C). Further, in another embodiment of the present invention, the method for producing a feed composition of the present invention is preferably a method for producing a feed composition including mixing a mixture of component (A) in liquid form and component (B) in liquid form with a plant protein as component (C) and further with an animal protein as component (C).

A mixing means is not particularly limited, but specifically, a mortar, a chopper, a blender, a food processor, a food mixer, a hand mixer, a planetary mill, a Nauta Mixer, a drum mixer, a Henschel mixer, a ribbon mixer, a homo mixer, an extruder, or the like can be used as a uniform-mixing means.

In an exemplary embodiment of the present invention, the mixture is preferably obtained by uniformly mixing components (A) and (B). Specifically, component (A) and component (B) in liquid form can be mixed by means of stirring or the like at a temperature at which component (B) can maintain liquid form. A time period for mixing is preferably 1 minute or more and preferably 100 minutes or less.

In an exemplary embodiment of the present invention, the mixture can preferably be further mixed with component (C). Specifically, the mixture can be mixed with component (C) and further a plant protein as component (C) at a temperature at which component (B) can maintain liquid form. The enhancing agent of the present invention can be used as the mixture.

In an exemplary embodiment of the present invention, after the mixture is mixed with component (C), the mixture and component (C) are further mixed using the above uniform-mixing means at a temperature at which component (B) can maintain liquid form. A time period for mixing is preferably 0.1 minutes or more, more preferably 1 minute or more, and further preferably 2 minutes or more, and preferably 100 minutes or less, more preferably 60 minutes or less, and further preferably 10 minutes or less.

After being mixed for a time period in the above range, the mixture and component (C) in an exemplary embodiment of the present invention or the enhancing agent of the present invention and component (C) in an exemplary embodiment of the present invention are preferably left to stand for 0.1 hours or more and 1 hour or more at a temperature at which component (B) can maintain liquid form from the viewpoint of enhancement in protein digestibility. A time period for leaving them to stand is preferably 0.1 hours or more, more preferably 0.5 hours or more, and further preferably 1 hour or more, and preferably 10000 hours or less, more preferably 5000 hours or less, and further preferably 1000 hours or less from the viewpoints of costs, productivity, and keeping quality.

In the method for producing a feed composition of the present invention in an exemplary embodiment of the present invention, a content of component (A) relative to 100 parts by mass of component (C) is more preferably 0.01 parts by mass or more, further preferably 0.02 parts by mass or more, and furthermore preferably 0.03 parts by mass or more from the viewpoint of enhancement in digestibility, and preferably 1 part by mass or less, more preferably 0.1 parts by mass or less, and further preferably 0.08 parts by mass or less from the viewpoints of (reasonable) digestion promotion, costs, and productivity, and components (A) and (B) can be mixed in this range.

In the method for producing a feed composition of the present invention in an exemplary embodiment of the present invention, a content of component (B) relative to 100 parts by mass of component (C) is preferably 1 part by mass or more, more preferably 10 parts by mass or more, and further preferably 20 parts by mass or more from the viewpoint of enhancement in digestibility, and preferably 100 parts by mass or less, more preferably 60 parts by mass or less, and further preferably 50 parts by mass or less from the viewpoints of costs and productivity, and components (A) and (B) can be mixed in this range.

In the method for producing a feed composition of the present invention in an exemplary embodiment of the present invention, a mass ratio between a content of component (A) and a content of component (B) relative to 100 parts by mass of component (C), (A)/(B), is preferably 0.0001 or more, more preferably 0.0010 or more, further preferably 0.0012 or more, furthermore preferably 0.0015 or more, and furthermore preferably 0.002 or more from the viewpoint of enhancement in growth performance, and preferably 0.1 or less, more preferably 0.012 or less, more preferably 0.010 or less, and further preferably 0.008 or less from the viewpoints of enhancement in growth performance, costs, and productivity, and components (A) and (B) can be mixed in this range to form the feed composition of the present invention.

Further, in the method for producing a feed composition of the present invention in an exemplary embodiment of the present invention, a mass ratio between a content of component (A) and a content of component (B) relative to 100 parts by mass of component (C), (A)/(B), is preferably 0.0001 or more, more preferably 0.0005 or more, further preferably 0.0010 or more, and furthermore preferably 0.0011 or more from the viewpoint of enhancement in digestibility, and preferably 0.02 or less, more preferably 0.004 or less, and further preferably 0.002 or less from the viewpoints of (reasonable) digestion promotion, costs, and productivity, and components (A) and (B) can be mixed in this range to form the feed composition of the present invention.

In other words, in an exemplary embodiment of the present invention, preferable aspects of a mass ratio of a content of component (A) to a content of component (B), (A)/(B), in the method for producing a feed composition of the present invention can be the same as those of the mass ratio between the contents, (A)/(B), in the aforementioned feed composition.

In an exemplary embodiment of the present invention, water, which is not particularly limited to tap water, ion-exchanged water, or the like, can be used, and the water content can be adjusted depending on the form of the feed composition of the present invention.

In an exemplary embodiment of the present invention, when the use form of the feed composition of the present invention is a semi-solid feed such as a single moist pellet, a moist pellet, or the like, the water content of the feed composition of the present invention is preferably 10 mass% or more and more preferably 20 mass% or more from the viewpoint of enhancement in shape retention and ease of granulation, and preferably 70 mass% or less and more preferably 60 mass% or less from the viewpoint of enhancement in storageability and the viewpoint of economy.

Further, in an exemplary embodiment of the present invention, when the use form of the feed composition of the present invention is a solid feed such as a dry pellet, an extruded pellet, or the like, the water content of the feed composition of the present invention is preferably 1 mass% or more and more preferably 3 mass% or more from the viewpoint of enhancement in shape retention and ease of granulation, and preferably 40 mass% or less and more preferably 30 mass% or less from the viewpoint of enhancement in storageability and the viewpoint of economy.

In an exemplary embodiment of the present invention, the feed composition of the present invention can contain the mixture of the enhancing agent of the present invention and component (C), and further, protein other than that.

Further, in an exemplary embodiment of the present invention, the feed composition of the present invention can contain the mixture of components (A) and (B) as active components in the protein digestibility enhancing agent, contain soy protein as component (C), and further contain protein other than soy protein.

Further, in an exemplary embodiment of the present invention, the feed composition of the present invention can contain the mixture of components (A) and (B) as active components in the protein digestibility enhancing agent, contain soy protein as component (C), and further contain a plant protein other than soy protein and an animal protein.

A content of the enhancing agent of the present invention in the feed composition of the present invention in an exemplary embodiment of the present invention is preferably 0.1 mass% or more, more preferably 1 mass% or more, further preferably 1.2 mass% or more, and furthermore preferably 1.5 mass% or more from the viewpoint of growth performance, and preferably 10 mass% or less, more preferably 5 mass% or less, and further preferably 3 mass% or less from the viewpoints of (reasonable) digestion promotion, costs, and productivity.

In an exemplary embodiment of the present invention, examples of the form of the feed composition of the present invention are not limited to, but include, for example, solid form, pellet form, granule form, and powder form. Examples of the pellet form include a moist pellet, a dry pellet, a single moist pellet, an extruded pellet, or the like.

In an exemplary embodiment of the present invention, when the feed composition of the present invention is in solid form, a particle size (long diameter) of the feed composition in solid form can be adjusted depending on the object fish species, but is, for example, preferably 0.5 mm or more and more preferably 1.0 mm or more.

In an exemplary embodiment of the present invention, fish and shellfish to which the feed composition of the present invention is fed are preferably fish and more preferably juvenile fish, and examples include, but are not particularly limited to, for example, Japanese amberjack, young Japanese amberjack, red seabream, greater amberjack, tuna, flounder, striped horse mackerel, horse mackerel, Japanese pufferfish, yellowtail amberjack, barred knifejaw, thread-sail filefish, black seabream, longtooth grouper, chub mackerel, convict grouper, and others.

In the method for producing a feed composition of the present invention in an exemplary embodiment of the present invention, components (A), (B), and (C) and optional components may be mixed separately, the enhancing agent of the present invention may be mixed with component (C) and optional components, or the feed composition of the present invention may be mixed with optional components.

[Method for farming fish and shellfish]

In an exemplary embodiment of the present invention, the present invention provides a method for farming fish and shellfish including feeding the above feed composition to farmed fish and shellfish. In an exemplary embodiment of the present invention, examples of the method for farming fish and shellfish in the present invention include a method for farming fish and shellfish which is common, except that fish and shellfish feed containing the feed composition of the present invention is fed.

The present invention discloses the protein digestibility enhancing agent for fish and shellfish, the feed composition for fish and shellfish, the method for producing a feed composition for fish and shellfish, and the method for farming fish and shellfish below.

<1> A protein digestibility enhancing agent for fish and shellfish containing (A) a reducing agent with an oxidation-reduction potential of 0.1 V or more and 0.6 V or less [hereinafter referred to as component (A)] and (B) a nonionic surfactant [hereinafter referred to as component (B)].

<2> The protein digestibility enhancing agent for fish and shellfish according to <1>, wherein component (A) is one or more selected from ethoxyquin and an ethoxyquin derivative.

<3> The protein digestibility enhancing agent for fish and shellfish according to <1> or <2>, wherein component (B) is a nonionic surfactant with an HLB of 3 or more, preferably 6 or more, more preferably 8 or more, and further preferably 9.5 or more, and 18 or less, preferably 16 or less, more preferably 14 or less, and further preferably 12 or less.

<4> The protein digestibility enhancing agent for fish and shellfish according to any of <1> to <3>, wherein a mass ratio of a content of component (A) to a content of component (B) [(A)/(B)] is 0.0001 or more, preferably 0.0005 or more, more preferably 0.0010 or more, further preferably 0.0011 or more, further preferably 0.0012 or more, and further preferably 0.0015 or more, and 0.1 or less, preferably 0.05 or less, more preferably 0.02 or less, further preferably 0.012 or less, further preferably 0.010 or less, further preferably 0.004 or less, and further preferably 0.002 or less.

<5> The protein digestibility enhancing agent for fish and shellfish according to any of <1> to <4>, wherein a content of component (A) is 0.05 mass% or more, preferably 0.10 mass% or more, and more preferably 0.12 mass% or more, and 5.0 mass or less, preferably 3.0 mass% or less, more preferably 2.0 mass% or less, further preferably 1.0 mass% or less, and furthermore preferably 0.2 mass% or less.

<6> The protein digestibility enhancing agent for fish and shellfish according to any of <1> to <5>, wherein component (B) is one or more nonionic surfactants selected from a sorbitan fatty acid ester and a polyoxyethylene sorbitan fatty acid ester.

<7> The protein digestibility enhancing agent for fish and shellfish according to any of <1> to <6>, wherein component (B) is one or more nonionic surfactants with an HLB of 3 or more and 18 or less which are liquid at 25°C selected from a sorbitan fatty acid ester and a polyoxyethylene sorbitan fatty acid ester.

<8> The protein digestibility enhancing agent for fish and shellfish according to any of <1> to <7>, wherein the protein digestibility enhancing agent is in liquid form at 25°C and has a viscosity at 25°C of preferably 1 mPa·s or more and more preferably 10 mPa·s or more, and preferably 10000 mPa·s or less and more preferably 1000 mPa·s or less.

<9> The protein digestibility enhancing agent for fish and shellfish according to any of <1> to <8>, the agent containing reducing agents, water, excipients, emulsifiers, antioxidants, antifungal agents, antibacterial agents, antibiotics, nutrients (lipids, sugars, carbohydrates, proteins, amino acids, vitamins, or minerals), carotenoid fortifiers, flavorings, flavor enhancers, enzymes, probiotics, and organic acids other than the foregoing, or the like (each excluding components (A) and (B)) in an amount of 10 mass% or less and 1 mass% or less.

<10> Use as a protein digestibility enhancing agent for fish and shellfish of an additive containing (A) a reducing agent with an oxidation-reduction potential of 0.1 V or more and 0.6 V or less [hereinafter referred to as component (A)] and (B) a nonionic surfactant [hereinafter referred to as component (B)].

<11> The use according to <10>, wherein component (A) is one or more selected from ethoxyquin and an ethoxyquin derivative.

<12> The use according to <10> or <11>, wherein component (B) is a nonionic surfactant with an HLB of 3 or more, preferably 6 or more, more preferably 8 or more, and further preferably 9.5 or more, and 18 or less, preferably 16 or less, more preferably 14 or less, and further preferably 12 or less.

<13> The use according to any of <10> to <12>, wherein a mass ratio of a content of component (A) to a content of component (B) [(A)/(B)] is 0.0001 or more, preferably 0.0005 or more, more preferably 0.0010 or more, further preferably 0.0011 or more, further preferably 0.0012 or more, and further preferably 0.0015 or more, and 0.1 or less,

# EP 4 691 255 A1

preferably 0.05 or less, more preferably 0.02 or less, further preferably 0.012 or less, further preferably 0.010 or less, further preferably 0.004 or less, and further preferably 0.002 or less.

<14> The use according to any of <10> to <13>, wherein a content of component (A) is 0.05 mass% or more, preferably 0.10 mass% or more, and more preferably 0.12 mass% or more, and 5.0 mass or less, preferably 3.0 mass% or less, more preferably 2.0 mass% or less, further preferably 1.0 mass% or less, and furthermore preferably 0.2 mass% or less.

<15> The use according to any of <10> to <14>, wherein component (B) is one or more nonionic surfactants selected from a sorbitan fatty acid ester and a polyoxyethylene sorbitan fatty acid ester.

<16> The use according to any of <10> to <15>, wherein component (B) is one or more nonionic surfactants with an HLB of 3 or more and 18 or less which are liquid at 25°C selected from a sorbitan fatty acid ester and a polyoxyethylene sorbitan fatty acid ester.

<17> The use according to any of <10> to <16>, wherein the additive is in liquid form at 25°C and has a viscosity at 25°C of preferably 1 mPa·s or more and more preferably 10 mPa·s or more, and preferably 10000 mPa·s or less and more preferably 1000 mPa·s or less.

<18> The use according to any of <10> to <17>, wherein the additive contains reducing agents, water, excipients, emulsifiers, antioxidants, antifungal agents, antibacterial agents, antibiotics, nutrients (lipids, sugars, carbohydrates, proteins, amino acids, vitamins, or minerals), carotenoid fortifiers, flavorings, flavor enhancers, enzymes, probiotics, and organic acids other than the foregoing, or the like (each excluding components (A) and (B)) in an amount of 10 mass% or less and 1 mass% or less.

<19> The use according to any of <10> to <18>, wherein the additive is mixed with protein.

<20> The use according to any of <10> to <19>, wherein the additive is mixed with a plant protein.

<21> The use according to any of <10> to <20>, wherein the additive is mixed with a plant protein originating from one or more protein sources selected from soybean meal, corn gluten meal, and defatted rice bran.

<22> The use according to any of <10> to <21>, wherein the additive is mixed with a plant protein and preferably a plant protein originating from one or more protein sources selected from soybean meal, corn gluten meal, and defatted rice bran, and is further mixed with an animal protein.

<23> A method for producing a protein digestibility enhancing agent for fish and shellfish including mixing (A) a reducing agent with an oxidation-reduction potential of 0.1 V or more and 0.6 V or less [hereinafter referred to as component (A)] and (B) a nonionic surfactant [hereinafter referred to as component (B)] to achieve a mass ratio of a content of component (A) to a content of component (B) [(A)/(B)] of 0.0001 or more, preferably 0.0005 or more, more preferably 0.0010 or more, further preferably 0.0011 or more, further preferably 0.0012 or more, and further preferably 0.0015 or more, and 0.1 or less, preferably 0.05 or less, more preferably 0.02 or less, further preferably 0.012 or less, further preferably 0.010 or less, further preferably 0.004 or less, and further preferably 0.002 less.

<24> A method for producing a protein digestibility enhancing agent for fish and shellfish including mixing (A) a reducing agent with an oxidation-reduction potential of 0.1 V or more and 0.6 V or less [hereinafter referred to as component (A)] and (B) a nonionic surfactant [hereinafter referred to as component (B)] to achieve a content of component (A) in a range of 0.05 mass% or more, preferably 0.10 mass% or more, and more preferably 0.12 mass% or more, and 5.0 mass% or less, preferably 3.0 mass% or less, more preferably 2.0 mass% or less, further preferably 1.0 mass% or less, and furthermore preferably 0.2 mass% or less, and a mass ratio of a content of component (A) to a content of component (B) [(A)/(B)] in a range of 0.0001 or more, preferably 0.0005 or more, more preferably 0.0010 or more, further preferably 0.0011 or more, further preferably 0.0012 or more, and further preferably 0.0015 or more, and 0.1 or less, preferably 0.05 or less, more preferably 0.02 or less, further preferably 0.012 or less, further preferably 0.010 or less, further preferably 0.004 or less, and further preferably 0.002 or less.

<25> A feed composition for fish and shellfish containing (A) a reducing agent with an oxidation-reduction potential of 0.1 V or more and 0.6 V or less [hereinafter referred to as component (A)], (B) a nonionic surfactant [hereinafter referred to as component (B)], and (C) protein [hereinafter referred to as component (C)].

<26> The feed composition for fish and shellfish according to <25>, wherein component (A) is one or more selected from ethoxyquin and an ethoxyquin derivative.

<27> The feed composition for fish and shellfish according to <25> or <26>, wherein component (B) is a nonionic surfactant with an HLB of 3 or more, preferably 6 or more, more preferably 8 or more, and further preferably 9.5 or more, and 18 or less, preferably 16 or less, more preferably 14 or less, and further preferably 12 or less.

<28> The feed composition for fish and shellfish according to any of <25> to <27>, wherein a mass ratio of a content of component (A) to a content of component (B) [(A)/(B)] is 0.0001 or more, preferably 0.0005 or more, more preferably 0.0010 or more, further preferably 0.0011 or more, further preferably 0.0012 or more, and further preferably 0.0015 or more, and **0.1** or less, preferably 0.05 or less, more preferably 0.02 or less, further preferably 0.012 or less, further preferably 0.010 or less, further preferably 0.004 or less, and further preferably 0.002 or less.

<29> The feed composition for fish and shellfish according to any of <25> to <28>, wherein a content of component (A) relative to 100 parts by mass of component (C) is 0.01 parts by mass or more, preferably 0.02 parts by mass or more, and more preferably 0.03 parts by mass or more, and 1 part by mass or less, preferably 0.2 parts by mass or less, more preferably 0.1 parts by mass or less, and further preferably 0.08 parts by mass or less.

<30> The feed composition for fish and shellfish according to any of <25> to <29>, wherein a content of component (B) relative to 100 parts by mass of component (C) is 1 part by mass or more, preferably 10 parts by mass or more, and more preferably 20 parts by mass or more, and 100 parts by mass or less, preferably 60 parts by mass or less, and more preferably 50 parts by mass or less.

<31> The feed composition for fish and shellfish according to any of <25> to <30>, wherein a content of component (C) in the feed composition is 10 mass% or more, preferably 20 mass% or more, and more preferably 30 mass% or more, and 90 mass% or less, preferably 70 mass% or less, and more preferably 50 mass% or less.

<32> The feed composition for fish and shellfish according to any of <25> to <31>, wherein a content of component (A) in the feed composition is 0.001 mass% or more and preferably 0.01 mass% or more, and 1 mass% or less and preferably 0.1 mass% or less.

<33> The feed composition for fish and shellfish according to any of <25> to <32>, wherein a content of component (B) in the feed composition is 0.1 mass% or more, preferably 0.5 mass% or more, and more preferably 1.0 mass% or more, and 90 mass% or less, preferably 50 mass% or less, and more preferably 20 mass% or less.

<34> The feed composition for fish and shellfish according to any of <25> to <33>, wherein component (B) is one or more nonionic surfactants selected from a sorbitan fatty acid ester and a polyoxyethylene sorbitan fatty acid ester.

<35> The feed composition for fish and shellfish according to any of <25> to <34>, wherein component (B) is one or more nonionic surfactants with an HLB of 3 or more and 18 or less which are liquid at 25°C selected from a sorbitan fatty acid ester and a polyoxyethylene sorbitan fatty acid ester.

<36> The feed composition for fish and shellfish according to any of <25> to <35>, wherein component (C) is a plant protein originating from one or more protein sources selected from soybean meal, corn gluten meal, and defatted rice bran, and preferably soy protein.

<37> The feed composition for fish and shellfish according to any of <25> to <36>, wherein component (C) is a plant protein, preferably a plant protein originating from one or more protein sources selected from soybean meal, corn gluten meal, and defatted rice bran, and more preferably soy protein, and an animal protein.

<38> The feed composition for fish and shellfish according to any of <25> to <37>, wherein component (C) is a protein for fish and shellfish feed, preferably a plant protein for fish and shellfish feed, and more preferably soy protein for fish and shellfish feed.

<39> The feed composition for fish and shellfish according to any of <25> to <38>, wherein an SH group concentration per mass of component (C) in the feed composition for fish and shellfish is 6.5 $\mu$mol/g or more, preferably 7 $\mu$mol/g or more, and more preferably 8 $\mu$mol/g or more, and 20 $\mu$mol/g or less, preferably 15 $\mu$mol/g or less, and more preferably 10 $\mu$mol/g or less.

<40> The feed composition for fish and shellfish according to any of <25> to <39>, wherein the feed composition for fish and shellfish contains water, reducing agents, excipients, emulsifiers, antioxidants, antifungal agents, antibacterial agents, antibiotics, nutrients (lipids, sugars, carbohydrates, amino acids, vitamins, or minerals), carotenoid fortifiers, flavorings, flavor enhancers, enzymes, probiotics, and organic acids other than the foregoing (each excluding components (A), (B), and (C)) in an amount of 1 mass% or more and preferably 10 mass% or more, and 80 mass% or less, preferably 70 mass% or less, and more preferably 60 mass%.

<41> The feed composition for fish and shellfish according to any of <25> to <40>, the composition further containing nutrients (sugars, lipids, carbohydrates, amino acids, vitamins, or minerals).

<42> A method for producing a feed composition for fish and shellfish including mixing the protein digestibility enhancing agent for fish and shellfish according to any of <1> to <9> and (C) protein [hereinafter referred to as component (C)].

<43> A method for producing a feed composition for fish and shellfish including mixing (A) a reducing agent with an oxidation-reduction potential of 0.1 V or more and 0.6 V or less [hereinafter referred to as component (A)], (B) a nonionic surfactant [hereinafter referred to as component (B)], and (C) protein [hereinafter referred to as component (C)].

<44> A method for producing a feed composition for fish and shellfish including further mixing a mixture [hereinafter referred to as the mixture] of (A) a reducing agent with an oxidation-reduction potential of 0.1 V or more and 0.6 V or less [hereinafter referred to as component (A)] and (B) a nonionic surfactant [hereinafter referred to as component (B)] with (C) protein [hereinafter referred to as component (C)].

<45> The method for producing a feed composition for fish and shellfish according to any of <42> to <44>, wherein a mixture of component (A) in liquid form and component (B) in liquid form is further mixed with component (C).

<46> The method for producing a feed composition for fish and shellfish according to any of <42> to <45>, wherein mixing is performed to achieve a mass ratio of a content of component (A) to a content of component (B) [(A)/(B)] in a range of 0.0001 or more, preferably 0.0005 or more, more preferably 0.0010 or more, further preferably 0.0011 or more, further preferably 0.0012 or more, further preferably 0.0015 or more, and further preferably 0.002 or more, and 0.1 or less, preferably 0.05 or less, more preferably 0.02 or less, further preferably 0.012 or less, further preferably 0.010 or less, further preferably 0.004 or less, and further preferably 0.002 or less.

<47> The method for producing a feed composition for fish and shellfish according to any of <42> to <46>, wherein mixing is performed to achieve an amount of component (A) relative to 100 parts by mass of component (C) in a range of 0.01 parts by mass or more, preferably 0.02 parts by mass or more, and more preferably 0.03 parts by mass or more, and 1 part by mass or less, preferably 0.2 parts by mass or less, more preferably 0.1 parts by mass or less, and further preferably 0.08 parts by mass or less, an amount of component (B) relative to 100 parts by mass of component (C) in a range of 1 part by mass or more, preferably 10 parts by mass or more, and more preferably 20 parts by mass or more, and 100 parts by mass or less, preferably 60 parts by mass or less, and more preferably 50 parts by mass or less, and a mass ratio of a content of component (A) to a content of component (B) [(A)/(B)] in a range of 0.0001 or more, preferably 0.0005 or more, more preferably 0.0010 or more, further preferably 0.0011 or more, further preferably 0.0012 or more, and further preferably 0.0015 or more, and 0.1 or less, preferably 0.05 or less, more preferably 0.02 or less, further preferably 0.012 or less, further preferably 0.010 or less, further preferably 0.004 or less, and further preferably 0.002 or less.

<48> A method for farming fish and shellfish including feeding the feed composition for fish and shellfish according to any of <25> to <41> to farmed fish and shellfish.

<49> A method for farming fish and shellfish including feeding the feed composition for fish and shellfish according to any of <25> to <41> to farmed juvenile fish.

<50> A method for farming fish and shellfish including feeding the feed composition for fish and shellfish according to any of <25> to <41> to farmed fish selected from Japanese amberjack, young Japanese amberjack, red seabream, greater amberjack, tuna, flounder, striped horse mackerel, horse mackerel, Japanese pufferfish, yellowtail amberjack, barred knifejaw, thread-sail filefish, black seabream, longtooth grouper, chub mackerel, and convict grouper.

Examples

<Example 1-1 and comparative example 1-1>

(1) Grinding protein source

Soybean meal (manufactured by Showa Sangyo Co., Ltd.), a protein source, was dry-ground under the condition of a number of revolutions of 10000 rpm using an ultra-centrifugal mill (ZM 200, manufactured by Verder Scientific Co. Ltd.) fitted with a screen having a mesh size of 0.5 mm. As a result of Kjeldahl analysis, the protein content (net amount) of the ground soybean meal was 43 mass%. Note that the protein content (net amount) was the value of the nitrogen content multiplied by 6.25. As a result of analysis of the soy protein by an electrophoresis method, the glycinin/$\beta$-conglycinin ratio was 2.8.

(2) Production of feed composition

Component (A) shown in Table 1 was uniformly dissolved in component (B) using stirring, thereby producing a mixed solution (protein digestibility enhancing agent) with an ethoxyquin concentration of 0.25 mass% (25°C). 1 g of the mixed solution was added to 10 g of the ground soybean meal powder in the above (1) as a protein source (containing 43 mass% protein as component (C)), and they were stirred in a mortar for about 5 minutes (25°C) to produce the feed composition of example 1-1 shown in Table 1. The feed composition of comparative example 1-1 was produced by adding 1 g of water, in place of 1 g of the mixed solution, to 10 g of the ground soybean meal powder in the above (1) as a protein source (containing 43 mass% protein as component (C)) and stirring them in a mortar for about 5 minutes (25°C). The feed compositions of example 1-1 and comparative example 1-1 (Table 1) were evaluated by the methods described below for the quantification of the SH group concentrations in the feed compositions and the protein digestibility (In vitro test).

[Quantification of SH group concentration in feed composition]

(1) Production of protein solution

In a 6-mL screw tube, 0.1 g of each of the above feed compositions shown in Table 1 and 4.9 g of a phosphate buffer (pH 8.0) were mixed (25°C). After this dispersion was shaken at 200 rpm at 25°C for 24 hours using a shaker (Bioshaker BR-21FH, manufactured by TAITEC CORPORATION), 1.5 mL of the supernatant was placed in a centrifugal tip (1.5 mL in capacity, manufactured by Eppendorf) and centrifuged at 15000 rpm for 5 minutes by a centrifuge (5424R, manufactured by Eppendorf). 1.3 mL of the supernatant was sampled to produce a protein solution. The protein concentration in the protein solution was quantified in terms of bovine serum albumin (BSA) using the Protein Assay BCA Kit (manufactured by FUJIFILM Wako Pure Chemical Corporation).

(2) Measurement of SH group concentration in feed composition

After 10 μL of a 4 mmol/L 5,5'-dithiobis(2-nitrobenzoic acid) (DTNB, manufactured by FUJIFILM Wako Pure Chemical Corporation) phosphate buffer (pH 8.0) solution, 40 μL of a 12 mass% sodium dodecyl sulfate (EMAL 0, manufactured by Kao Corporation) phosphate buffer (pH 8.0) solution, and 190 μL of the above protein solution were mixed (25°C) and left to stand for 30 minutes in a 96-well microplate (manufactured by Eppendorf), the absorbance at 412 nm was measured using a microplate reader (VersaMax, manufactured by Molecular Devices). A calibration curve was prepared with an aqueous solution of L-cysteine hydrochloride monohydrate (manufactured by FUJIFILM Wako Pure Chemical Corporation) immediately after production (L-cysteine hydrochloride monohydrate concentration: 0 to 100 ppm) as a reference material, and the SH group concentration in the above protein solution was quantified from the absorbance at 412 nm. The SH group concentration per mass of component (C) (μmol/g) was quantified from the difference in absorbance from a blank sample in which DTNB was not mixed, and the protein concentration in terms of BSA.

The results are shown in Table 1. The higher SH group concentration values in Table 1 mean that more SH groups were produced due to the cleavage of disulfide bonds in the protein.

[Protein digestibility (In vitro test)]

(1) Production of red seabream extract enzyme

The intestine removed from red seabream *(Pagrus major),* to which pure water was added to achieve a mass ratio of 1:1, was ground with a mixer and filtered. The obtained filtrate was used as a red seabream extract digestive enzyme.

(2) Production of protein digestion treatment liquid

A crude treatment liquid was produced by mixing, in a 30-mL eggplant flask, the feed composition produced in example 1-1, the red seabream extract digestive enzyme produced in the above (1), and a phosphate buffer (pH 8.0) such that the soy protein in the composition was contained at 0.5 mass%. 24 hours later, the crude treatment liquid was placed in a sampling tube, and the sampling tube was immersed in boiling water and boiled for 5 minutes to heat the entire crude treatment liquid in the sampling tube. The heat-treated sampling tube was centrifuged (10000 rpm, 5 minutes) to deproteinate the crude treatment liquid to obtain a protein digestion treatment liquid (hereinafter referred to as treatment liquid). Note that a blank sample in which a phosphate buffer (pH 8.0) was added in place of the red seabream extract enzyme was also produced in the same manner and used for the calculation of the rate of protein digestion described below.

(3) Calculation of rate of protein digestion

After 50 μL of the above treatment liquid and 800 μL of a 0.01 mass% sodium trinitrobenzenesulfonate dihydrate (manufactured by FUJIFILM Wako Pure Chemical Corporation) aqueous solution were added to 1.55 mL of a phosphate buffer (pH 8.0) and reacted for 1 hour at 60°C, 800 μL of hydrochloric acid (1 mol/L) was further added and stirred to stop the reaction. The absorbance at 420 nm was measured at room temperature (25°C) by a spectrophotometer (UV-Visible Spectrophotometer U2910, manufactured by Hitachi, Ltd.) using a cell with an optical path length of 1 cm. A calibration curve was prepared with a DL-leucine (manufactured by FUJIFILM Wako Pure Chemical Corporation) phosphate buffer (pH 8.0) solution (DL-leucine concentration: 0 to 500 ppm) as a reference material, and the amino acid concentration (ppm) in the above treatment liquid was calculated from the absorbance at 420 nm. Note that the rate of protein digestion was determined with the difference from the amino acid concentration in the blank sample not containing the above red seabream extract enzyme as amino acids produced by the hydrolysis reaction of the digestive enzyme.

For evaluating the protein digestibility of example 1-1, the relative value with respect to the rate of protein digestion of comparative example 1-1 was given as the evaluation. The result is shown in Table 1. The higher protein digestibility (relative evaluation) values in Table 1 mean more enhancement in protein digestion.

<Examples 1-2 to 1-8>

The feed compositions were produced, and the quantification of the protein SH group concentrations and the evaluation of the protein digestibility (in-vitro test) were conducted in the same manner as in example 1-1, except that the concentrations and types of components (A) and (B) in example 1-1 were replaced with those shown in Table 1.

<Comparative examples 1-2 to 1-4>

The feed compositions were produced, and the quantification of the protein SH group concentrations and the evaluation of the protein digestibility (in-vitro test) were conducted in the same manner as in example 1-1, except that the concentrations and types of components (A) and (B) in example 1-1 were replaced with those shown in Table 1.

[Table 1]

| | Feed composition | | | | | | | | | | | SH group concentration | | Protein digestibility [1] (relative evaluation) |
| | Protein digestibility enhancing agent for fish and shellfish | | | | | | | | | | | | | |
| | Component (A) | | Component (A') | | Component (B) | | (A)/(B) mass ratio | (A')/(B) mass ratio | Content of (A) relative to 100 parts by mass of component (C) (parts by mass) | Content of (A') relative to 100 parts by mass of component (C) (parts by mass) | Content of (B) relative to 100 parts by mass of component (C) (parts by mass) | Measured value (μmol/g) | Relative value [1] | |
| | Type | Oxidation-reduction potential (V) | Type | Oxidation-reduction potential (V) | Type | HLB | | | | | | | | |
| Example 1-1 | Ethoxyquin | 0.35 | - | - | C18:1 EO(6) sorbitan fatty acid ester | 10.0 | 0.0025 | - | 0.058 | - | 23 | 8.4 | 140 | 135 |
| Example 1-2 | Ethoxyquin | 0.35 | - | - | C18:1 EO(6) sorbitan fatty acid ester | 10.0 | 0.0050 | - | 0.058 | - | 12 | 8.4 | 140 | 124 |
| Example 1-3 | Ethoxyquin | 0.35 | - | - | C18:1 EO(6) sorbitan fatty acid ester | 10.0 | 0.0013 | - | 0.058 | - | 47 | 7.2 | 120 | 168 |
| Example 1-4 | Ethoxyquin | 0.35 | - | - | C18:1 EO(6) sorbitan fatty acid ester | 10.0 | 0.025 | - | 0.058 | - | 2.3 | 6.6 | 110 | 113 |
| Example 1-5 | Ethoxyquin | 0.35 | - | - | C12 EO(6) sorbitan fatty acid ester | 13.3 | 0.0025 | - | 0.058 | - | 23 | 8.4 | 140 | 120 |
| Example 1-6 | Ethoxyquin | 0.35 | - | - | C18:1 sorbitan fatty acid ester | 5.0 | 0.0025 | - | 0.058 | - | 23 | 8.4 | 140 | 118 |
| Example 1-7 | Ethoxyquin | 0.35 | - | - | C18:1 EO(20) sorbitan fatty acid ester | 15.0 | 0.0025 | - | 0.058 | - | 23 | 8.4 | 140 | 111 |
| Example 1-8 | Ethoxyquin | 0.35 | - | - | C12 EO(20) sorbitan fatty acid ester | 16.7 | 0.0025 | - | 0.058 | - | 23 | 8.4 | 140 | 110 |
| Comparative example 1-1 | - | - | - | - | - | - | - | - | 0 | - | 0 | 6.0 | 100 | 100 |
| Comparative example 1-2 | - | - | Butylated hydroxyanisole | 0.70 | C18:1 EO(6) sorbitan fatty acid ester | 10.0 | - | 0.0025 | - | 0.058 | 23 | 6.0 | 100 | 105 |
| Comparative example 1-3 | - | - | Sodium sulfite | 0.05 | C18:1 EO(6) sorbitan fatty acid ester | 10.0 | - | 0.0025 | - | 0.058 | 23 | 6.6 | 110 | 95 |
| Comparative example 1-4 | Ethoxyquin | 0.35 | - | - | - | - | - | - | 0.058 | - | 0 | 6.3 | 105 | 105 |

*1: relative value with comparative example 1-1 as 100

The components in the table are those listed below. The oxidation-reduction potential of component (A) is expressed as a value with respect to the standard hydrogen electrode potential measured by the measurement method described in paragraph 0050 of JP-A 2022-159087. However, for those that were not able to be measured by this measurement method, M. Vandeput, et al., Electroanalysis, 30, 1293 (2018) was consulted. As the HLB of component (B), HLB values calculated by the Griffin's method are used.

<Used component>

Component (A)

Ethoxyquin (oxidation-reduction potential 0.35 V): manufactured by the Institute at Toronto

Component (A')

· Butylated hydroxyanisole (oxidation-reduction potential 0.70 V): manufactured by Sigma-Aldrich Co. LLC
· Sodium sulfite (oxidation-reduction potential 0.05 V): manufactured by FUJIFILM Wako Pure Chemical Corporation

Component (B): nonionic surfactant

· C18:1 EO(6) sorbitan fatty acid ester: RHEODOL TW-O106, manufactured by Kao Corporation (HLB 10)
· C12 EO(6) sorbitan fatty acid ester: RHEODOL TW-L106, manufactured by Kao Corporation (HLB 13.3)
· C18:1 sorbitan fatty acid ester: RHEODOL SP-O10, manufactured by Kao Corporation (HLB 5)
· C18:1 EO(20) sorbitan fatty acid ester: RHEODOL TW-0120, manufactured by Kao Corporation (HLB 15)
· C12 EO(20) sorbitan fatty acid ester: RHEODOL TW-L120, manufactured by Kao Corporation (HLB 16.7)

It was able to be confirmed from the results of example 1-1 to example 1-8 in Table 1 that the feed composition of the present invention, in other words, the feed composition using the enhancing agent of the present invention, achieved higher digestibility than the feed compositions not containing the enhancing agent of the present invention.

It was able to be confirmed that comparative example 1-2 in Table 1, in which 0.058 parts by mass (a content relative to 100 parts by mass of component (C)) of a reducing agent with an oxidation-reduction potential of more than 0.6 V and component (B) were combined, exhibited a smaller degree of digestibility enhancement compared to the examples in which the enhancing agent of the present invention, i.e., a combination of 0.058 parts by mass of (A) and component (B), was used. It is inferred that this was because the reducing agent with an oxidation-reduction potential of more than 0.6 V did not bring about structural changes in the protein due to the cleavage of S-S bonds and development of a digestibility enhancing effect.

It was able to be confirmed that comparative example 1-3 in Table 1, in which 0.058 parts by mass (a content relative to 100 parts by mass of component (C)) of a reducing agent with an oxidation-reduction potential of less than 0.1 V and component (B) were combined, was equivalent to the feed compositions not containing the enhancing agent of the present invention in the SH group concentration in the feed composition, but inferior in digestibility compared to the examples in which the enhancing agent of the present invention, i.e., a combination of 0.058 parts by mass of (A) and component (B), was used. It is inferred that this was because the combination of the reducing agent with an oxidation-reduction potential of less than 0.1 V and component (B) caused the cleavage of not only S-S bonds in the protein to be digested (for example, a plant protein), but also those in the protein of the digestive enzyme itself to change its structure, leading to reduction in the activity of the digestive enzyme itself, and thus was not able to achieve enhancement in protein digestibility.

In other words, it is considered that the enhancing agent of the present invention, i.e. a combination of component (A) with an oxidation-reduction potential of 0.1 V or more and 0.6 V or less and component (B), was able to efficiently act on S-S bonds in the protein to be digested (for example, a plant protein) and cleave the S-S bonds while keeping the protein structure of the digestive enzyme and the enzyme activity, and thus was able to achieve enhancement in protein digestibility.

<Example 2-1 and comparative example 2-1>

[Growth performance (In vivo test)]

(1) Production of feed composition

After 25 g of the feed composition described in example 1-1 (protein content (net amount) 39 mass%), 40 g of fish meal (protein content (net amount) 61 mass%), and 50 g of tap water were mixed well, the mixture was molded using a noodle maker with a screen size of 2 mm (manufactured by Royal Philips) to produce the feed composition for fish and shellfish described in example 2-1. The protein content (net amount) and water content of the obtained feed composition were 30 mass% and 43 mass%, respectively. For the measurement of the protein content (net amount), the nitrogen content was measured using a Kjeldahl analysis system, and the obtained value was multiplied by 6.25 and the value was used as the protein mass (mass%). Further, for the measurement of the water content, the water content of 1 g of the feed was measured using a halogen moisture meter (manufactured by Mettler Toledo). The feed composition for fish and shellfish described in comparative example 2-1 was produced in the same manner as the feed composition for fish and shellfish of example 2-1 after 25 g of the feed composition described in comparative example 1-1 (protein content (net amount) 39 mass%), 40 g of fish meal (protein content (net amount) 61 mass%), and 50 g of tap water were mixed well. The protein content (net amount) and water content of the obtained feed composition were 30 mass% and 43 mass%, respectively.

(2) Method for feeding feed composition for fish and shellfish

Using 2 kg of a filter material (glass ring, manufactured by Charm Co., Ltd.) and a 100-L overflow aquarium (manufactured by R's AQUA) filled with artificial seawater, ten juvenile red seabream with a size of about 5 cm (about 17 g) were reared (rearing density: 1.7 kg/m$^3$) under the conditions of satiation feeding twice a day in the morning and evening and a water temperature of 20°C $\pm$ 1.5°C for 28 days with the start of feeding as day 0. Note that the fed juvenile red seabream ingested the feed composition of the present invention without any problem. Further, it was confirmed that the juvenile red seabream which ingested the feed composition of the present invention were able to grow without diarrhea and other problems.

(3) Measurement of growth performance (rate of weight gain and feed efficiency)

The weight of the fish as of day 0 and the weight of the fish as of day 28 were measured. The rate of weight gain and feed efficiency were calculated by the formulas below. The feed efficiency means how well the feed was digested and is a measure indicating the digestibility and growth performance achieved by the feed.

Rate of weight gain (%) = {(weight as of day 28) / (weight as of day 0) $\times$ 100} - 100

Feed efficiency (%) = {(weight as of day 28) - (weight as of day 0)} / mass of fed feed $\times$ 100

(4) Protein digestibility (In vivo test)

Six juvenile red seabream reared (rearing density: 3.9 kg/m$^3$) in 50 L of artificial seawater for 28 days were reared at room temperature (20°C) for 3 days by satiation feeding twice a day in the morning and evening. Note that the juvenile fasted for 2 days each before and after feeding. After fasting for 2 days, the juvenile red seabream were removed from the aquarium, and all feces and others that settled out at the bottom of the aquarium were collected, filtered (pore size 1 $\mu$m), and dried under reduced pressure at 30°C for 1 day to obtain a fecal solid. The mass and protein content (net amount) of the fecal solid were measured, and the rate of protein digestion (in vivo test) was calculated by the formula below.

Rate of protein digestion (%) = {(mass of fed feed $\times$ protein content (net amount) of feed) - (mass of fecal solid $\times$ protein content (net amount) of fecal solid)} / (mass of fed feed $\times$ protein content (net amount) of feed) $\times$ 100

For evaluating the growth performance (rate of weight gain and feed efficiency) and protein digestibility of example 2-1, the relative values with respect to the evaluations of comparative example 2-1 were given as the evaluations. The results are shown in Table 2. The higher values in Table 2 mean more enhancement in the growth performance (rate of weight gain and feed efficiency) and protein digestion.

[Table 2]

| | | Growth performance evaluation in 100-L water tank | | | | | |
|---|---|---|---|---|---|---|---|
| | Feed composition | Amount of weight gain | | Feed efficiency | | Protein digestibility | |
| | | Rate of gain (%) | Relative value [*2] | Feed efficiency (%) | Relative value[*2] | Rate of digestion (%) | Relative value[*2] |
| Example 2-1 | Example 1-1 | 97 | 131 | 75 | 139 | 83 | 109 |
| Comparative example 2-1 | Comparative example 1-1 | 74 | 100 | 54 | 100 | 76 | 100 |
| *2: relative value with comparative example **2-1** as 100 | | | | | | | |

It was able to be confirmed from Table 2 that example 2-1 using the feed composition of the present invention achieved enhancement in the growth performance (amount of weight gain and feed efficiency) of individual fish and shellfish compared to comparative example 2-1 not using the feed composition. Further, it was able to be confirmed that example 2-1 also achieved enhancement in the protein digestibility in the body of fish and shellfish compared to comparative example 2-1.

<Examples 3-1 to 3-3 and comparative example 3-1>

[Growth performance (In vivo test)]

(1) Production of feed composition

The feed compositions of examples 3-1 to 3-3 were produced in the same manner as in example 2-1, except that the feed compositions described in examples 1-2 to 1-4 were used in place of the feed composition described in example 1-1. The protein content (net amount) and water content of each obtained feed composition were 30 mass% and 43 mass%, respectively. Further, the feed composition described in comparative example 3-1 was produced in the same manner as in example 2-1, except that the composition shown in Table 3 was used. The protein content (net amount) and water content of the obtained feed composition were 30 mass% and 43 mass%, respectively.

(2) Method for feeding feed composition

In a 100-L round plastic container containing 50 L of artificial seawater, five juvenile red seabream with a size of about 5 cm (about 18 g) were reared (rearing density: 1.8 kg/m$^3$) under the conditions of satiation feeding twice a day in the morning and evening and room temperature (20°C) for 28 days with the start of feeding as day 0. Note that the fed juvenile red seabream ingested all of the feed compositions of the present invention without any problem. Further, it was confirmed that the juvenile red seabream which ingested the feed compositions of the present invention were able to grow without diarrhea and other problems.

(3) Measurement of growth performance (rate of weight gain and feed efficiency)

The growth performance (rate of weight gain and feed efficiency) was calculated in the same manner as in example 2-1.
For evaluating the growth performance (rate of weight gain and feed efficiency) of examples 3-1 to 3-3, the relative values with respect to the evaluations of comparative example 3-1 were given as the evaluations. The results are shown in Table 3.

[Table 3]

| | Growth performance evaluation in 50-L water tank | | | | | |
|---|---|---|---|---|---|
| | Feed composition | Amount of weight gain | | Feed efficiency | |
| | | Rate of gain (%) | Relative value*3 | Feed efficiency (%) | Relative value*3 |
| Example 3-1 | Example 1-2 | 52 | 158 | 55 | 138 |
| Example 3-2 | Example 1-3 | 45 | 136 | 50 | 125 |
| Example 3-3 | Example 1-4 | 43 | 130 | 49 | 123 |
| Comparative example 3-1 | Comparative example 1-1 | 33 | 100 | 40 | 100 |
| *3: relative value with comparative example 3-1 as 100 | | | | | |

It was able to be confirmed from Table 3 that example 3-1 to example 3-3 using the feed compositions of the present invention achieved enhancement in the growth performance (amount of weight gain and feed efficiency) of individual fish and shellfish compared to comparative example 3-1 not using the feed composition.

<Example 4-1 and comparative example 4-1>

The feed composition was produced and the protein digestibility was evaluated in the same manner as in example 1-1, except that corn gluten meal (manufactured by KOGOSTCH Co., Ltd., protein content (net amount) 60 mass%) was used in place of the soybean meal as a protein source in example 1-1.

[Table 4]

| | Feed composition | | | | | | | Protein digeshbility*4 (relative evaluation) |
|---|---|---|---|---|---|---|---|---|
| | Protein digestibility enhancing agent for fish and shellfish | | | | | | | |
| | Component (A) | | Component (B) | | | Content of (A) relative to 100 parts by mass of component (C) (parts by mass) | Content of (B) relative to 100 parts by mass of component (C) (parts by mass) | |
| | Type | Oxidation-reduction potential (V) | Type | HLB | (A)/(B) mass ratio | | | |
| Example 4-1 | Ethoxyquin | 0.35 | C18:1 EO(6) sorbitan fatty acid ester | 10.0 | 0.0025 | 0.042 | 17 | 147 |
| Comparative example 4-1 | None | - | None | - | - | 0 | 0 | 100 |
| *4: relative value with comparative example 4-1 as 100 | | | | | | | | |

<Example 5-1 and comparative example 5-1>

The feed composition was produced and the protein digestibility was evaluated in the same manner as in example 1-1, except that defatted rice bran (manufactured by Boso oil and fat Co., Ltd., protein content (net amount) 16 mass%) was used in place of the soybean meal as a protein source in example 1-1.

[Table 5]

| | Feed composition | | | | | | | Protein digestibility[*5] (relative evaluation) |
|---|---|---|---|---|---|---|---|---|
| | Protein digestibility enhancing agent for fish and shellfish | | | | | | | |
| | Component (A) | | Component (B) | | (A)/(B) mass ratio | Content of (A) relative to 100 parts by mass of component (C) (parts by mass) | Content of (B) relative to 100 parts by mass of component (C) (parts by mass) | |
| | Type | Oxidation-reduction potential (V) | Type | HLB | | | | |
| Example 5-1 | Ethoxyquin | 0.35 | C18:1 EO(6) sorbitan fatty acid ester | 10.0 | 0.0025 | 0.132 | 53 | 159 |
| Comparative example 5-1 | None | - | None | - | - | 0 | 0 | 100 |
| *5: relative value with comparative example 5-1 as 100 | | | | | | | | |

It was able to be confirmed from the results of example 4-1 in Table 4 and example 5-1 in Table 5 that the feed compositions using the protein digestibility enhancing agent for fish and shellfish of the present invention achieved high protein digestibility. Further, it was able to be confirmed that the feed compositions using the protein digestibility enhancing agent for fish and shellfish of the present invention achieved enhancement in protein digestibility.

**Claims**

1. A protein digestibility enhancing agent for fish and shellfish comprising (A) a reducing agent with an oxidation-reduction potential of 0.1 V or more and **0.6 V** or less [hereinafter referred to as component (A)] and (B) a nonionic surfactant [hereinafter referred to as component (B)].

2. The protein digestibility enhancing agent for fish and shellfish according to claim 1, wherein the component (A) is one or more selected from ethoxyquin and an ethoxyquin derivative.

3. The protein digestibility enhancing agent for fish and shellfish according to claim 1 or **2,** wherein the component (B) is a nonionic surfactant with an HLB of 3 or more and 18 or less.

4. The protein digestibility enhancing agent for fish and shellfish according to any one of claims 1 to **3,** wherein a mass ratio of a content of the component (A) to a content of the component (B) [(A)/(B)] is 0.0001 or more and 0.1 or less.

5. The protein digestibility enhancing agent for fish and shellfish according to any one of claims 1 to 4, wherein a content of the component (A) is 0.05 mass% or more and 5.0 mass% or less.

6. The protein digestibility enhancing agent for fish and shellfish according to any one of claims 1 to 5, wherein the component (B) is one or more nonionic surfactants selected from a sorbitan fatty acid ester and a polyoxyethylene sorbitan fatty acid ester.

7. A feed composition for fish and shellfish comprising (A) a reducing agent with an oxidation-reduction potential of 0.1 V or more and 0.6 V or less [hereinafter referred to as component (A)], (B) a nonionic surfactant [hereinafter referred to as component (B)], and (C) protein.

8. The feed composition for fish and shellfish according to claim 7, wherein the component (A) is one or more selected from ethoxyquin and an ethoxyquin derivative.

9. The feed composition for fish and shellfish according to claim 7 or 8, wherein the component (B) is a nonionic surfactant with an HLB of 3 or more and 18 or less.

10. The feed composition for fish and shellfish according to any one of claims 7 to 9, wherein a mass ratio of a content of the component (A) to a content of the component (B) [(A)/(B)] is 0.0001 or more and 0.1 or less.

## INTERNATIONAL SEARCH REPORT

| International application No. |
|---|
| **PCT/JP2024/001270** |

**A.    CLASSIFICATION OF SUBJECT MATTER**

*A23K 20/111*(2016.01)i; *A23K 50/80*(2016.01)i
FI:    A23K20/111; A23K50/80

According to International Patent Classification (IPC) or to both national classification and IPC

**B.    FIELDS SEARCHED**

Minimum documentation searched (classification system followed by classification symbols)

A23K10/00-50/90

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2019-083798 A (NAKAYAMA, Jinsuke) 06 June 2019 (2019-06-06)<br>claims 11-12, paragraphs [0047], [0071], [0072], [0077] | 1-10 |
| X | JP 08-508885 A (UNIVERSAL FOODS CORPORATION) 24 September 1996 (1996-09-24)<br>claims 26-39, pp. 29-31 | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/001270**

| Patent document cited in search report | | | Publication date (day/month/year) | Patent family member(s) | | | Publication date (day/month/year) |
|---|---|---|---|---|---|---|---|
| JP | 2019-083798 | A | 06 June 2019 | (Family: none) | | | |
| JP | 08-508885 | A | 24 September 1996 | US | 5466599 | A | |
| | | | | columns 17, 18 | | | |
| | | | | US | 5922560 | A | |
| | | | | US | 6015684 | A | |
| | | | | US | 6413736 | B1 | |
| | | | | US | 2003/0049241 | A1 | |
| | | | | WO | 1994/023594 | A1 | |

Form PCT/ISA/210 (patent family annex) (July 2022)

## REFERENCES CITED IN THE DESCRIPTION

**Patent documents cited in the description**

- JP 2003235471 A
- JP 2007209355 A
- JP H10113129 A
- JP 2022159087 A

**Non-patent literature cited in the description**

- **M. VANDEPUT et al.** *Electroanalysis*, 2018, vol. 30, 1293